# EUROPEAN PATENT SPECIFICATION

(11) **EP 0 475 718 B1**
(45) Date of publication and mention of the grant of the patent: **29.11.1995**
(21) Application number: 91308238.4
(22) Date of filing: 10.09.1991
(51) Int. Cl.: F02D 41/14, F02D 33/02

(54) **Method of controlling air-fuel ratio of a gas engine**
Verfahren zur Steuerung des Luft-Kraftstoffverhältnisses in einer Gas-Brennkraftmaschine
Méthode pour commander le rapport air/carburant dans un moteur à combustion interne à gas

(30) Priority: 10.09.1990 JP 237200/90
(43) Date of publication of application: 18.03.1992
(73) Proprietor: TOKYO GAS CO., LTD., Minato-ku Tokyo 105 (JP)
(72) Inventor: Yakabe, Hisataka, Koto-ku, Tokyo (JP); Hishinuma, Masakazu, Konan-ku, Kanagawa-ken (JP)
(74) Representative: Tomlinson, Kerry John

(56) References cited:
- PATENT ABSTRACTS OF JAPAN vol. 010, no. 163 (M-487) 11 June 1986 & JP-A-61 014 459 (KIYATAPIRAA MITSUBISHI KK)
- PATENT ABSTRACTS OF JAPAN vol. 011, no. 105 (M-577) 3 April 1987 & JP-A-61 252 860 (NIPPON CARBURETER CO)
- PATENT ABSTRACTS OF JAPAN vol. 013, no. 161 (M-815) 18 April 1989 & JP-A-64 000 312 (YANMAR DIESEL ENGINE CO)
- PATENT ABSTRACTS OF JAPAN vol. 010, no. 174 (M-490) 19 June 1986 & JP-A-61 023 857 (AISAN KOGYO KK)

## Description

The present invention relates to a method of controlling the air-fuel ratio of a gas engine in response to oxygen concentration at a three-way catalyst exhaust purifying apparatus of the engine.

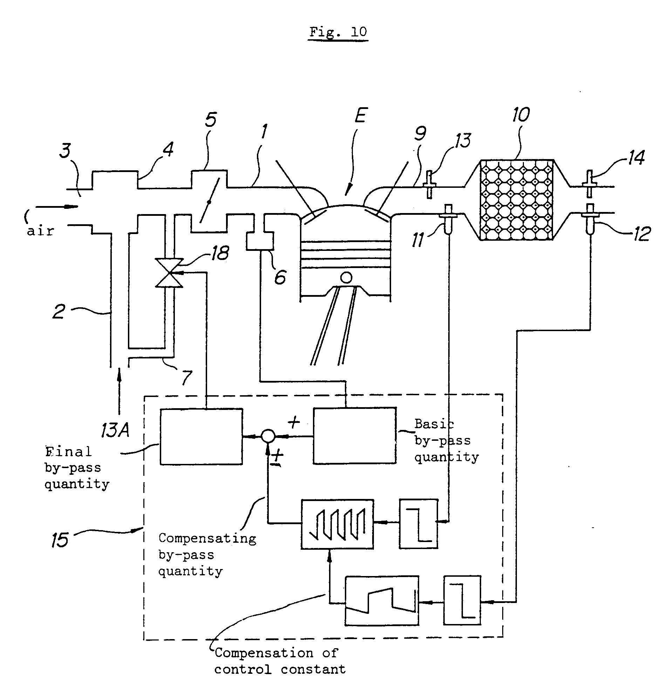

In Fig. 10 in an intake line 1 of the gas engine E, there are a mixer 4 for mixing fuel (such as town gas 13A) supplied from a fuel line 2 with air supplied from an air intake 3, a throttle valve 5, and a pressure sensor 6 detecting intake pressure.

Also, in a by-pass line 7, which connects the fuel line 2 to a line between the mixer 4 in the intake line 1 and the throttle valve 5, there is a by-pass valve which is an air-fuel ratio control valve 8.

On the other hand, in an exhaust line 9, a three-way catalyst 10 is interposed. Up-stream of the three-way catalyst 10, there is a main oxygen sensor 11 and a front (up-stream side) thermometric sensor 13. Also, down-stream of the three-way catalyst 10, there is a sub oxygen sensor 12 and a rear (down-stream side) thermometric sensor 14. (The phrase "up-stream" means a side near the intake 3. On the other hand, the phrase "down-stream" means a side away from said intake 3).

The pressure sensor 6, both of the oxygen sensors 11 and 12, and the air-fuel ratio control valve 8 are connected to a control unit which is represented by a numeral 20. The control unit 20 sets up a basic by-pass quantity in response to a signal transmitted from pressure sensor 6, sets up a control constant based on a main feedback signal from the main oxygen sensor 11, determines a compensating by-pass quantity by compensating the control constant based on a sub feedback signal from the sub oxygen sensor 12, compensates the basic by-pass quantity in accordance with the compensating by-pass quantity, and sets up the final by-pass quantity so that said unit 15 controls the drive current driving the air-fuel ratio control valve 8.

It is well-known that, in order to make the threeway catalyst 10 effectively function in the above-mentioned control method, an air-fuel ratio between air and fuel gas should be adjusted within an extremely narrow range or "window" (Approximately 0.995 ± 0.005, in air-fuel ratio). In the above-mentioned control method, with a mixed state of air and fuel gas through mixer 4 kept a little leaner (surplus air state), the shortfall of fuel gas is supplied by air-fuel ratio control valve 8 (via the by-pass line 7). Such a supply of fuel gas is carried out as follows:

### (1) Detection of air-fuel ratio:

This detection is carried out by the main oxygen sensor 11. Since the output characteristics of the oxygen sensor are of nonlinear type as shown in Fig. 11, with output voltage near 0.5V as threshold, the air-fuel ratio is judged to be rich if the voltage is over 0.5 V. On the other hand, in the case that the voltage is under 0.5V, the air-fuel ratio is judged to be lean.

### (2) Control signal of air-fuel ratio control valve 8:

The control signal is output such that the valve 8 will be shut if the signal transmitted from the main oxygen sensor 11 indicates rich, also, the valve 8 will be opened if the above-mentioned signal indicates lean.

The above-mentioned prior control method has the following inconveniences:
(1) since there is a difference in location between a trailing point of inflection in the output characteristic of the oxygen sensor 11 and the center of the air-fuel ratio window, the center of the window will be located at a so-called "shoulder" portion being represented by numeral a (0.6 - 0.7 V in output shown in Fig. 11) of the output curve of the oxygen sensor 11.
(2) Since the output characteristic of the oxygen sensor 11 is of nonlinear type, a great difference in the air-fuel ratio will be generated due to a small difference in the output of the oxygen sensor 11 at shoulder a.
(3) Since the oxygen sensor 11 has a temperature characteristic and the output value of said sensor will greatly vary depending on exhaust temperature, control at shoulder a will be influenced by the temperature.
(4) During use of the oxygen sensor 11 extending over a long period of time, there is a possibility of deterioration thereof. If the output value of said sensor falls or is shifted, it is possible that the controlled air-fuel ratio will be changed.
(5) During many hours use, it is possible that the air-fuel window of the three-way catalyst 10 is changed. In such a case, there is no effective response.
(6) During many hours use, it is possible that the air-fuel window of three-way catalyst 10 is contracted. In such a case, a severe control is required. However, since the control capacity is constant, it is difficult to carry out such a severe control.

JP-A-61023857 discloses a gas engine with an air-fuel control system using a valve in a gas by-pass line and an oxygen sensor in the exhaust system.

The present invention is made to solve the existing problems mentioned above. The present invention is intended to provide an air-fuel ratio control method of a gas engine that optimizes control of the air-fuel ratio, by making a control which is unaffected by deterioration of the oxygen sensor 11 and three-way catalyst 10, that is a robust control which is independent of output characteristics of the oxygen sensor 11.

According to the invention, there is provided a method of controlling the air-fuel ratio of a gas engine, comprising the steps of:
modulating a periodic drive current for driving a by-pass valve with waveforms such as rectangular wave, sinusoidal wave, triangular wave, etc., with predetermined periods and amplitudes, in response to signals transmitted from a main oxygen sensor installed up-stream of a three-way catalyst interposed in an exhaust line of the gas engine, and said pressure sensor being installed in an intake line from a gas-air mixer to the engine;
detecting distortions of response waveforms of signals transmitted from a sub oxygen sensor, which sensor is installed down-stream of said three-way catalyst; and
controlling said drive current so as to remove said distortions.

As is well known, the three-way catalyst 10 has a characteristic so-called "storage effect", that is, the three-way catalyst 10 adsorbs surplus oxygen when oxygen is surplus (a lean condition), while the three-way catalyst 10 carries out an oxidising reaction with the adsorbed oxygen when oxygen runs short (a rich condition). The storage effect of the three-way catalyst 10 is as if the three-way catalyst 10 has a kind of buffer effect for oxygen change. It is considered that the storage is effective if the three-way catalyst 10 is fresh, while it becomes non-effective when the three-way catalyst 10 deteriorates.

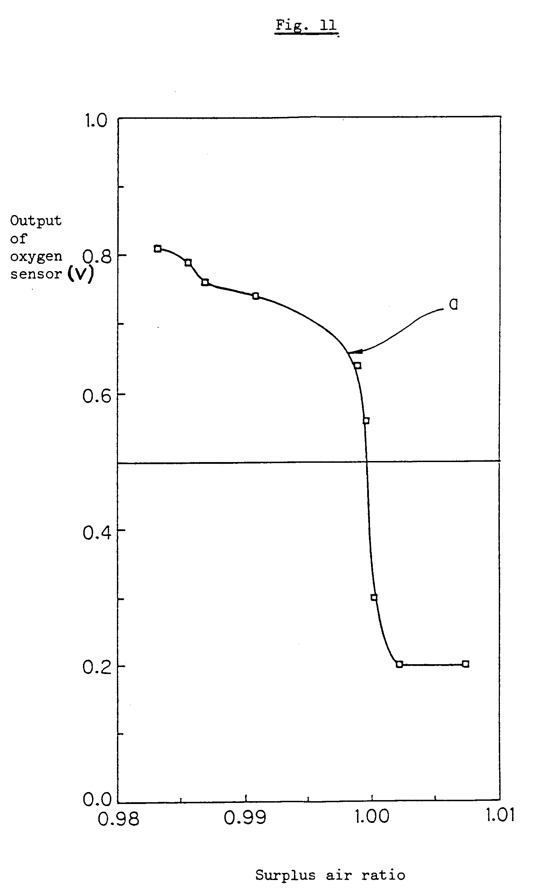

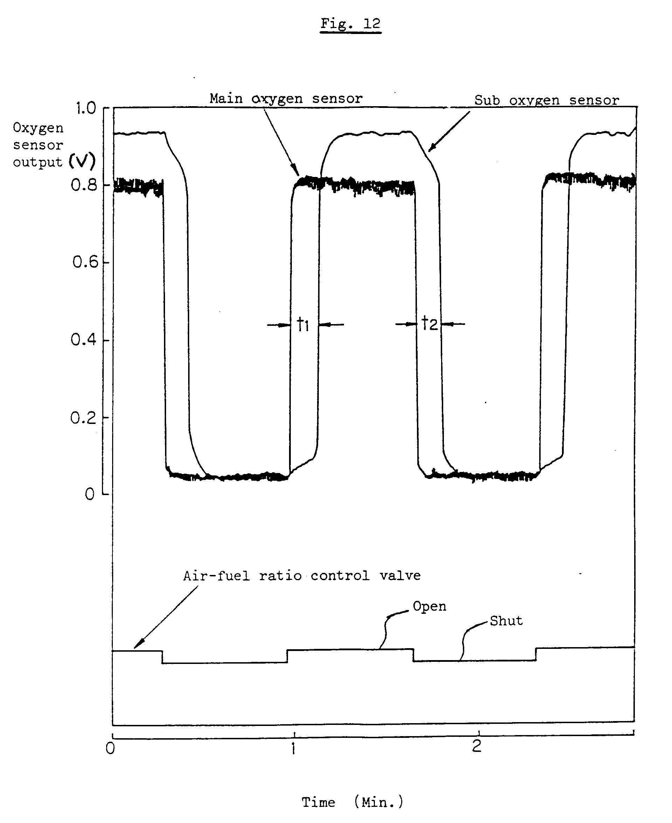

Fig. 12 shows a response waveform (an output characteristic) of a sub oxygen sensor 12, which waveform is generated when air-fuel ratio control valve 8 is opened and shut alternately (in a step-like manner). In said waveform, a response delay t₁ relative to the output signal of main oxygen sensor 11 is as long as 10-20 s. Since it is hard to conclude that such a response delay is caused by a transmission delay of exhaust gas in catalysts, it seems to be due to said storage effect.

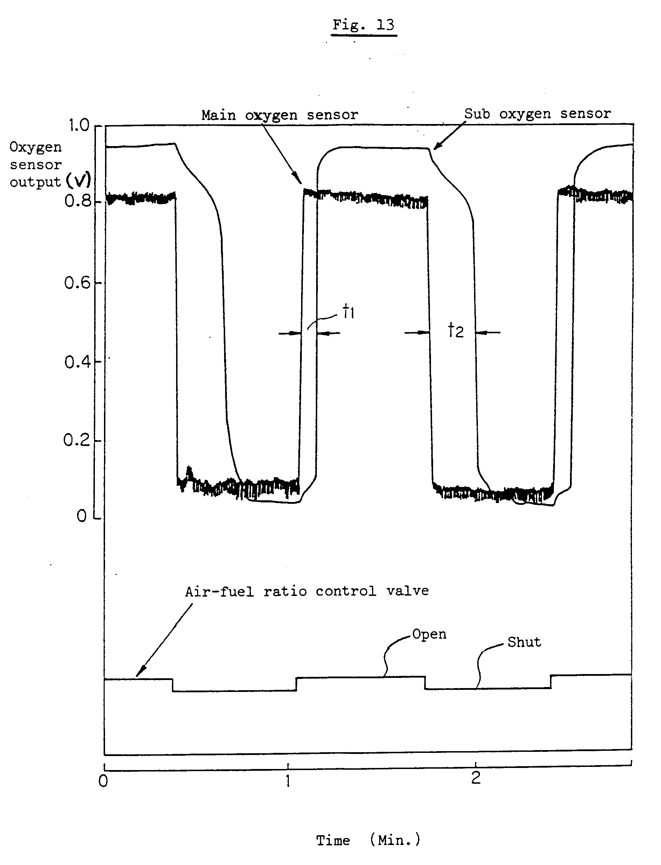

Also Fig. 13 shows a response waveform of the sub oxygen sensor 12, which waveform is generated when the valve 8 is alternately open and shut in a richer state of mean A/F than that of Fig. 12. In Fig. 13, there is a time delay t₂ between trailing points of inflection in outputs (waveform) of the main oxygen sensor 11 and the sub oxygen sensor 12. The period of the time-delay t₂ shown in Fig. 13 is extremely long relative to the corresponding period shown in Fig. 12. It is considered that such behaviour occurs because the quantity of oxygen being absorbed in the three-way catalyst 10, which oxygen is consumed for oxidation in a rich condition, is greater than the oxygen quantity consumed in the state shown in Fig. 12. Consequently, a large quantity of oxygen is absorbed by the three-way catalyst 10 when a lean condition occurs.

As mentioned above, if a state of alternate opening and shutting varies, both the state of the storage effect of three-way catalyst 10 and the response delay of the oxygen sub sensor 12 should vary. Since the storage effect depends on conditions such as quantity of adsorbed oxygen, density of oxygen, rate of exhaust flow, etc., alternate opening and shutting in the rich condition of mean A/F will delay the trailing point of inflection, while alternate opening and shutting in the lean condition of mean A/F will delay the leading point of inflection.

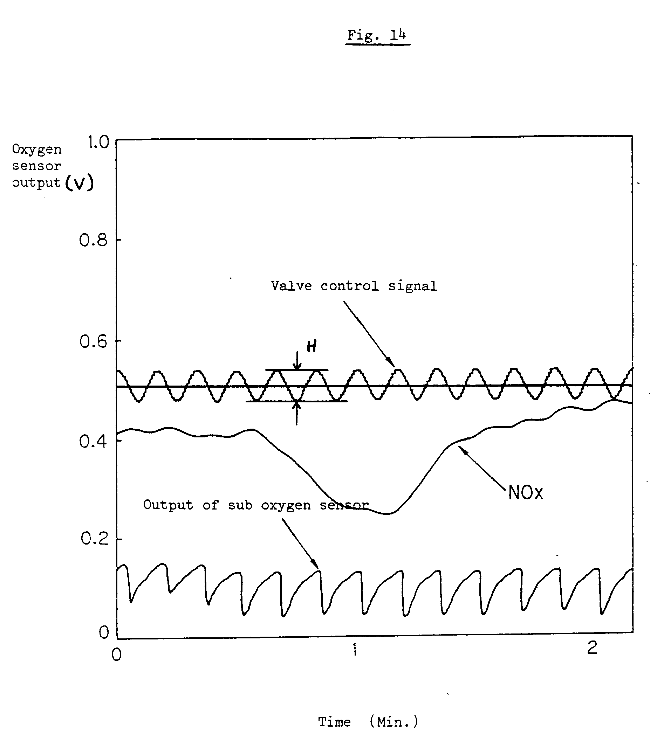

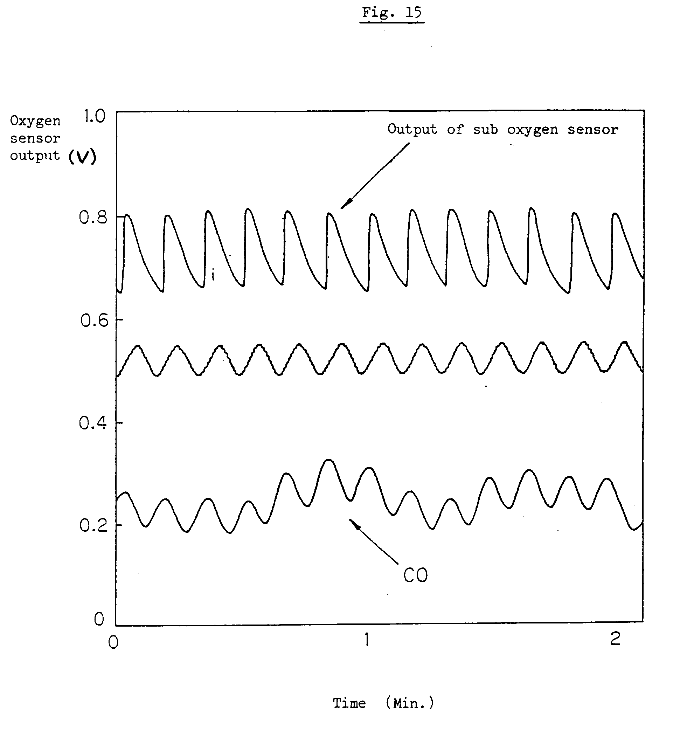

Figs. 14 and 15 show response waveforms of the sub oxygen sensor 12 when the air-fuel ratio control valve 8 is opened and shut alternately following sinusoidal waves at a frequency of 0.1 Hz. Fig. 14 shows a case in which the center of amplitude (baseline or H/2 level) is located on a side in which the rich condition will occur, while Fig. 15 shows a case in which the center of amplitude is located on a side in which the lean condition will occur. Referring to Figs. 14 and 15, it is evident that according to the location of the center of amplitude, the leading edge is delayed in the case shown in Fig. 14 and the trailing edge is delayed in the case shown in Fig. 15. As described above, in a so-called "double oxygen sensors system" carrying out a control with oxygen sensor 11 and sub sensor 12 applied both in front of and to the rear of three-way catalyst 10, the control is carried out in the rich condition side for safety against NOₓ, and in the case that the three-way catalyst 10 is fresh, the storage effect appreciably aggravates the response characteristic (in other words, due to the storage effect, trailing points of inflection will be delayed) of the sub oxygen sensor 12, and therefore, the storage effect becomes one of the causes that make the control difficult. Conversely, however, a control point at which the time delay on the leading and trailing points of inflection are equal can be considered to be a point at which the storage effect should be activated, and at which the center of alternate opening and shutting becomes optimum. In other words, such a center of alternate opening and shutting is considered to be the optimum point in the air-fuel ratio control state.

As a variety of researches produce the above-mentioned principle, the present invention is made based on this principle.

In the present invention, the storage effect of the three-way catalyst is detected. Based on the storage effect and consequent response delay of the oxygen sensor, the drive current for driving the air-fuel ratio control valve is controlled and then the control of the air-fuel ratio becomes optimum.

Since the magnitude of the oxygen sensor output is not directly applied in this process, the output characteristic of the oxygen sensor will not affect the control. Similarly, it is hard to conclude that a deterioration of the oxygen sensor will affect the drive current, in a condition that the sensor output can be reasonably detected. Since it seems that the optimum point for the storage effect is considered to be the optimum point for the controlled state of air-fuel ratio, the control is also robust against deterioration of the three-way catalyst.

A preferred embodiment of the invention will now be described by way of example only with reference to the accompanying drawings, wherein:
Fig. 1 is a general block diagram showing an apparatus for carrying out the present invention;
Fig. 2 is a control block diagram;
Fig. 3 to Fig. 5 are diagrams showing different embodiments of the distortion detecting section;
Fig. 6 is a matrix map diagram;
Fig. 7 is a diagram showing an embodiment of the compensating section controlled by the sub signal;
Fig. 8 is a control block diagram for changing the threshold of the sub oxygen sensor;
Fig. 9 is a characteristic diagram of oxygen sensor output vs. time for showing an example of experimental results;
Fig. 10 is a general block diagram showing a prior art system;
Fig. 11 is a characteristic diagram of oxygen sensor output vs. air-fuel ratio;
Figs. 12 and 13 are characteristic diagrams of oxygen sensor output vs. time; and
Figs. 14 and 15 are diagrams showing response waveforms of the sub oxygen sensor when the air-fuel ratio control valve is modulated with a 0.1 Hz sinusoidal wave.

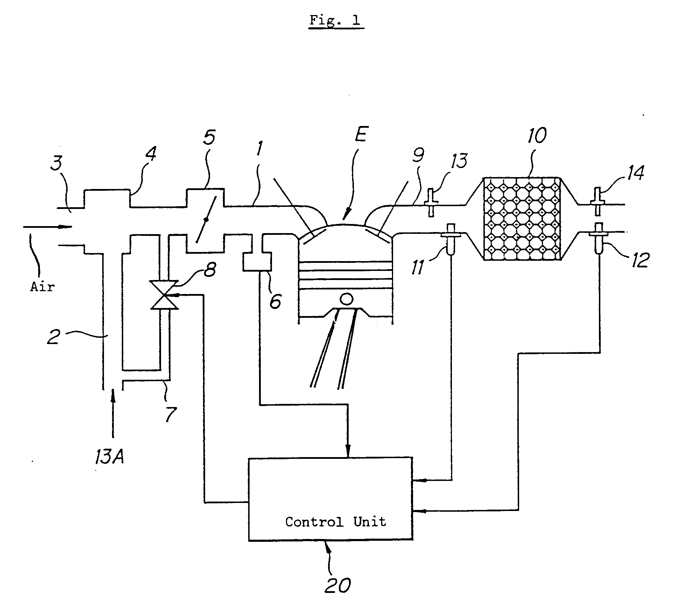

An apparatus for carrying out the present invention is shown in Fig. 1. This equipment is the same as that shown in Fig. 10 in general, except for the control mode of a control unit 20.

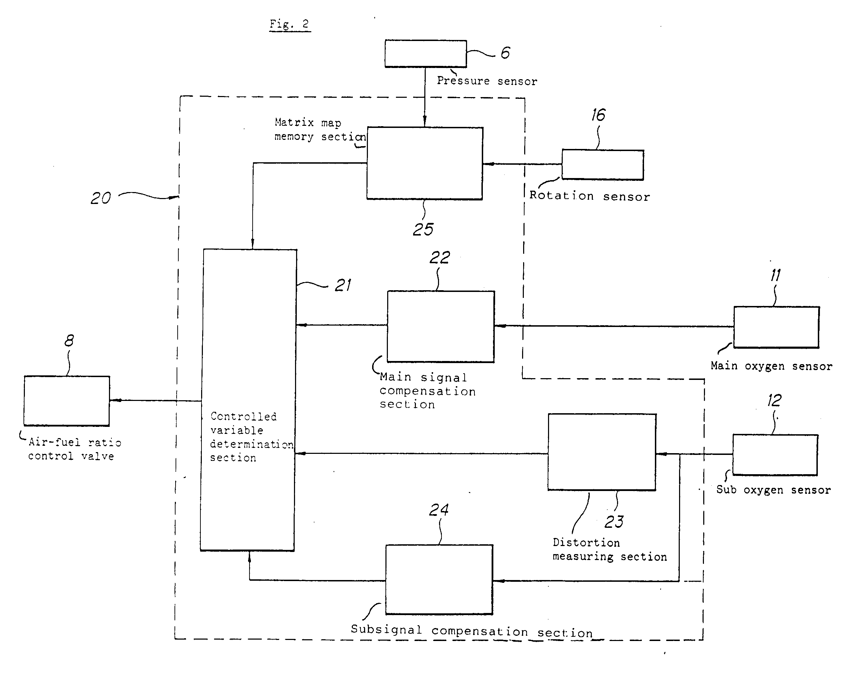

Fig. 2 shows a control block diagram for executing all of control modes I - VIII described hereinafter.

Control unit 20 is provided with a controlled variable determination section 21. Connected to the determination section 21 are a compensation section 22 for a main signal with which section the main oxygen sensor 11 is joined, a distortion measuring section 23 being joined with the sub oxygen sensor 12, a compensation section 24 for a sub signal, and a matrix map 25 responsive to the pressure sensor 6 and a rotation sensor 16. The controlled variable determination section 21 determines the controlled variable based on signals transmitted from all of sections 22 - 25, then transmits an output to the air-fuel ratio control valve 8.

### I. Basic mode:

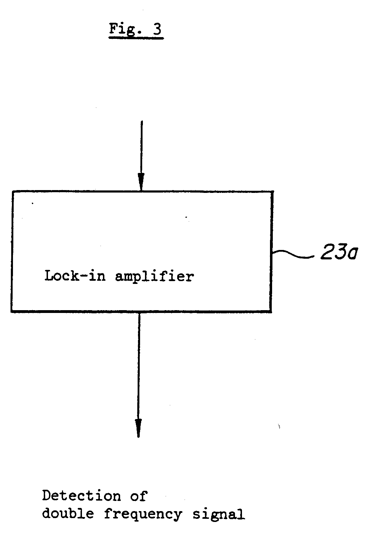

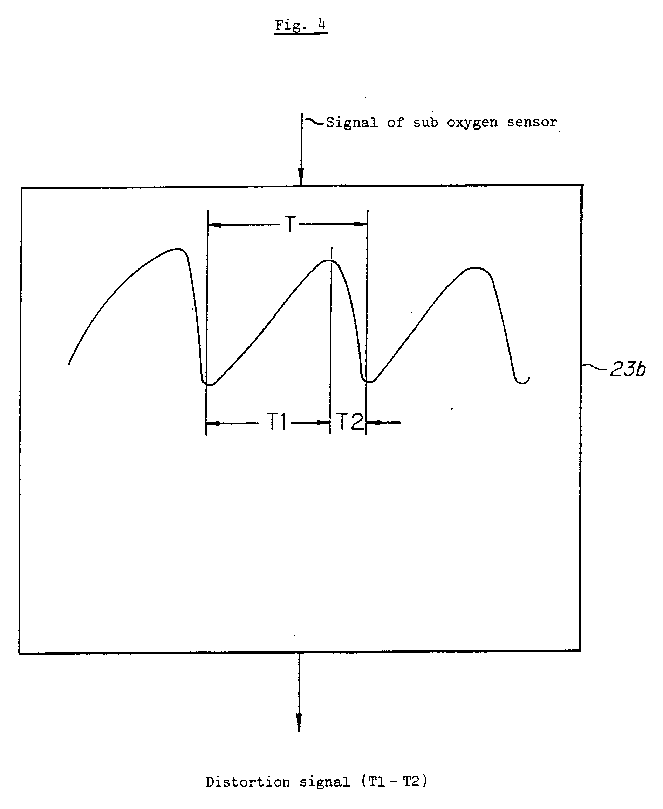

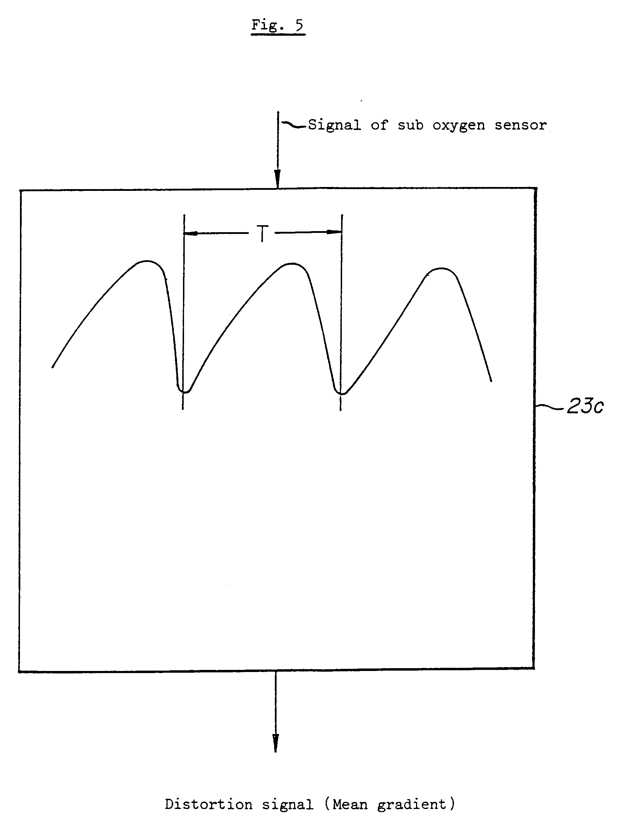

In this mode, the drive current of air-fuel ratio control valve 8 oscillates with a periodic waveform such as rectangular wave, sinusoidal wave, triangular wave, etc., and distortions, that is, response delay or asymmetry of response waveforms from the sub oxygen sensor 12 are detected. Then, a feedback is transmitted so as to equate response delays of leading and trailing points of inflection or to make the asymmetry of the waveform symmetrical. This mode is concretely explained as follows:
(a) In a distortion measuring section 23a shown in Fig. 3, by means of a lock-in amplifier, etc. detecting only a specific frequency component, a double frequency component of the valve oscillation frequency of the sub oxygen sensor 12 is detected and then a compensation signal is feedback for nullifying the double frequency component.
(b) In a distortion measuring section 23b shown in Fig. 4, a time-period T₁ from a leading point of inflection to a trailing point of inflection and time period T₂ from said trailing point of inflection to another leading point of inflection, which time-periods T₁ and T₂ have a total time-period T, are measured. And then, a feedback signal is transmitted to control the amplitude center so as to equate both the time-periods (T₁ and T₂) mentioned above, that is, so as to nullify a distortion signal (represented as "T₁ - T₂"). By means of such feedback, the result shown in Fig. 13 is attained.
(c) In a distortion measuring section 23c shown in Fig. 5, a mean gradient of one time-period T is measured, a feedback signal is transmitted to the amplitude center so as to nullify the mean gradient, that is, so as to make the waveform symmetrical.

### II. Mode for using a matrix map of amplitude centers of an intake pressure and number of revolutions:

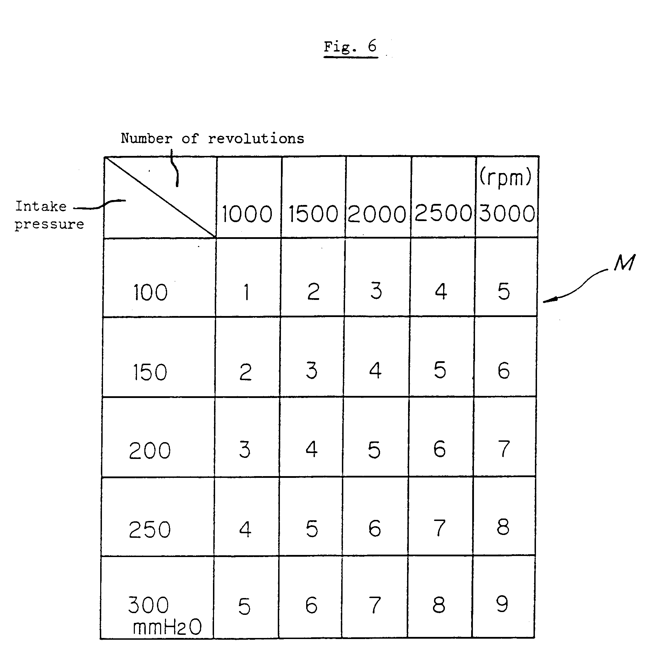

In the above-mentioned mode, any disturbance such as a sudden load fluctuation, etc. cannot be responded to. In this mode, a matrix map M of amplitude centers shown in Fig. 6, which map corresponds to an intake pressure from the pressure sensor 6 indicating a load and number of revolutions is stored, in a matrix map memory section 25 (In the map M, there are the control constants indicating the amplitude center, at which center the distortion of the response waveform of sub oxygen sensor 12 is nullified.). And then, the amplitude center is immediately shifted in response to a domain change caused due to load fluctuation, etc., so that the responsiveness is improved. In addition, the control constant is varied depending upon setting of the mixer, weather conditions, etc.

### III. Mode for using an output of the oxygen sub sensor.

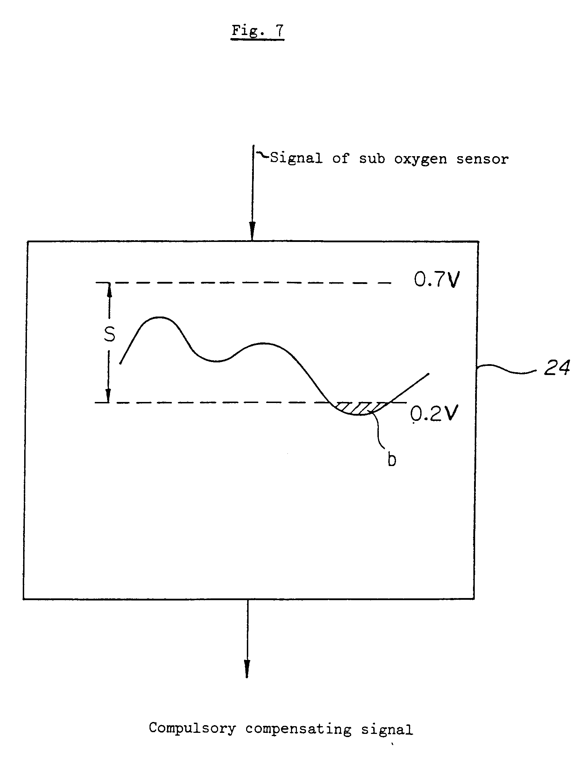

In addition to modes I and II described above, in order to improve the responsiveness for a sudden disturbance such as load fluctuation, etc., this mode includes a step of detecting an output of the sub oxygen sensor 12, and a step of transmitting a compulsory compensating feedback signal so as to immediately return the sub oxygen sensor output into normal domain S (0.7 - 0.2 V) by drawing a conclusion of abnormality, if the output falls below a fixed level (say 0.2 V), in compensating section 24 controlled by the sub signal shown in Fig. 7. Thus the output is stabilized within the normal domain S at all times.

### IV. Mode for using an output of the main oxygen sensor.

In addition to the above-mentioned processes I and II, an output signal of main oxygen sensor 11 is also detected in this mode, in order to improve the responsiveness to a sudden disturbance such as load fluctuation, etc. If the output is beyond a specified range for over a specified time, a feedback signal is transmitted so as to return the output into a specified range in the same way as that described in reference to Fig. 7.

### V. Mode for changing a threshold voltage of the sub oxygen sensor

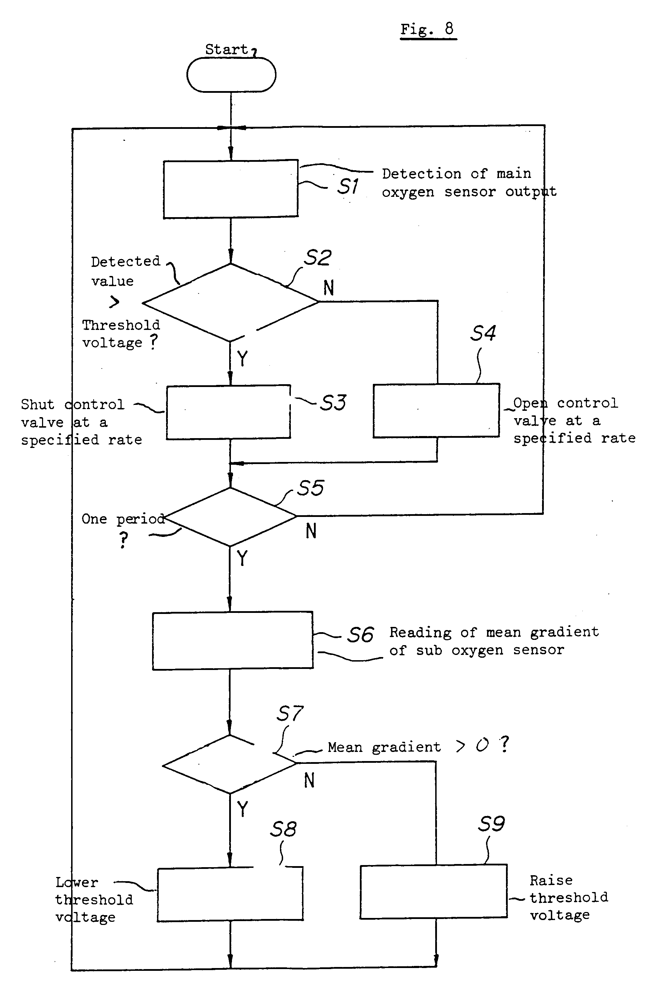

In this mode, the difference between the characteristic of the sub oxygen sensor 12 and the air-fuel ratio window, which difference is caused by a deterioration, etc. of the three-way catalyst 10, is corrected. The threshold voltage is changed after detecting an output of the sub oxygen sensor 12 at a point in which the distortion of the sensor is nullified, in the above-mentioned control mode I. That is, as shown in Fig. 8, an output of the main oxygen sensor 11 is detected (Step S1), and it is decided whether or not the value of the detected output is higher than the threshold voltage (e.g. 0.5 V) (Step S2). If YES, the air-fuel ratio control valve 8 will be shut at a specified rate (Step S3). If NO, the air-fuel ratio control valve 8 will be opened at a specified rate, and then a process represented by Step S5 is carried out. In Step S5, whether or not the output waveform of the main oxygen sensor has run on for one period is judged. If YES, a mean gradient of the output waveform of the sub oxygen sensor 12 is read (Step S6 and Fig. 5). Then whether or not the mean gradient read in Step S6 is larger than zero is decided (Step S7). If YES, the threshold voltage is changed (or shifted) to a lower level (Step S8). If NO, the threshold voltage is changed to a higher level (Step S9).

### VI. Mode for detecting a deteriorated state of three-way catalyst 10 by detecting the output amplitude of sub oxygen sensor 12

The air-fuel ratio control valve 8 is oscillated at a specified amplitude and a specified frequency, so as to sweep the amplitude center from the rich side to the lean side. Then, the deteriorated state is decided based on the amplitude of the response signal generated from the sub oxygen sensor.

### VII. Mode for transmitting a feedback signal so that the amplitude of the response signal generated from sub oxygen sensor 12 is constant

Before executing the control mode I mentioned above, the deteriorated state of the three-way catalyst 10 is decided by mode VI above. Then the amplitude and frequency of the air-fuel ratio control valve 8 is controlled so that the amplitude of the response signal generated from the sub oxygen sensor 12 stays within a specified range.

### VIII. Mode for changing the threshold voltage of the main oxygen sensor

In the same way as the above-mentioned mode V, due to the output signal distortion of sub oxygen sensor 12, the threshold voltage of main oxygen sensor 11 is changed.

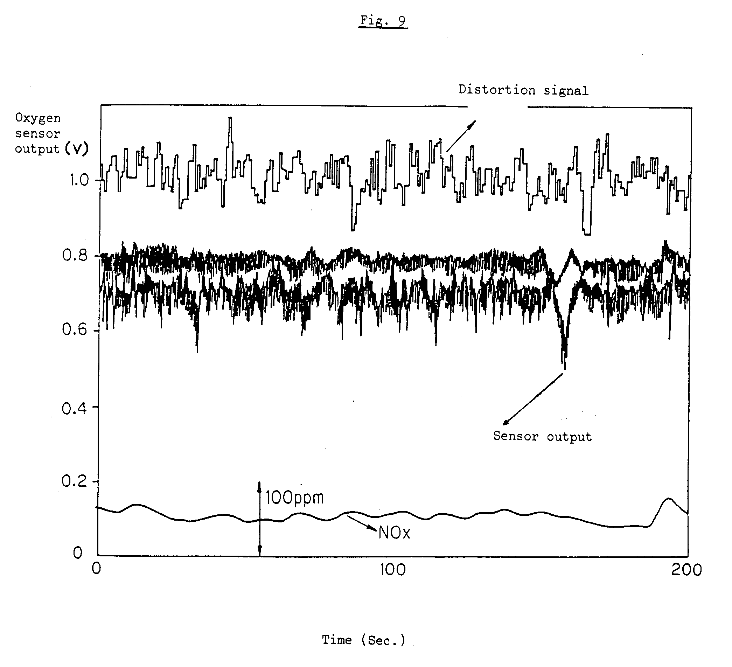

One of the experimental examples, that the above-mentioned control modes have carried out, is shown in Fig. 9.

As described above, the present invention achieves the following effects:
(1) The optimum control of the air-fuel ratio is achieved, and purification efficiency can be improved.
(2) Overshoot caused by a delay of the three-way catalyst can be prevented by the sub oxygen sensor. In the prior art, since there is the time delay of the sub oxygen sensor, the valve response is delayed. Therefore, there is a trend of overshooting which is observed both on the rich and lean side. However, in the present invention, such overshooting can be removed.
(3) Window influence caused by the aging of the three-way catalyst and the oxygen sensors can be removed.
(4) Deteriorated state of the three-way catalyst can be detected.

## Claims

1. A method of controlling the air-fuel ratio of a gas engine (E), comprising the steps of:
modulating (21) a periodic drive current for driving an intake by-pass valve (8) with waveforms having predetermined periods and amplitudes, in response to signals transmitted from a main oxygen sensor (11) and a pressure sensor (6) said by-pass valve introducing gas into the intake line of the gas engine, said main oxygen sensor (11) being installed up-stream of a three-way catalyst (10) interposed in an exhaust line (9) of the gas engine (E), and said pressure sensor (6) being installed in an intake line (1) from a gas-air mixer (4) to the engine;
detecting (23) distortions of response waveforms of signals transmitted from a sub oxygen sensor (12), which sensor is installed down-stream of said three-way catalyst (10); and
controlling said drive current so as to remove said distortions.

2. A method as claimed in claim 1 wherein as said distortion detecting step a response delay of leading and/or trailing flanks of said response waveforms is detected.

3. A method as claimed in claim 1 wherein as said distortion detecting step an asymmetry of said response waveforms is detected.

4. A method as claimed in claim 1, 2 or 3 wherein as said distortion detecting step a specific frequency component of the sub oxygen sensor signal is detected.

5. A method as claimed in claim 4 wherein said frequency component is at twice the frequency of the valve drive current.

6. A method as claimed in claim 1, 2 or 3 wherein as said distortion detecting step a difference is detected between a time from a minimum of the sub sensor signal to the immediately following maximum and a time from said maximum to the immediately following minimum.

7. A method as claimed in claim 1, 2 or 3 wherein as said distortion detecting step the mean gradient of a cycle of said sub sensor signal is detected.

8. A method as claimed in any preceding claim wherein as said controlling step the d.c. baseline of the periodic drive current is increased or decreased.

9. A method as claimed in any preceding claim wherein the output of the sub oxygen sensor (12) is monitored, and when it falls outside a predetermined range a compulsory compensating feedback signal is immediately provided to control the drive current to bring the output within the predetermined range.

10. A method as claimed in any preceding claim wherein the output of the sub oxygen sensor (12) is monitored at a time when the distortion has been nullified, and the threshold voltage of the sub oxygen sensor (12) is controlled to correct a difference between the sub oxygen sensor (12) characteristic and the desired air-fuel ratio window caused by changes in the three-way catalyst (10).

## Patentansprüche

1. Verfahren zum Steuern/Regeln des Luft-Kraftstoff-Verhältnisses eines Gasmotors (E), umfassend die Schritte:
Modulieren (21) eines periodischen Antriebsstroms zum Antrieb eines Einlaß-Bypassventils (8) mit Wellenformen vorbestimmter Perioden und Amplituden in Antwort auf von einem Hauptsauerstoffsensor (11) und einem Drucksensor (6) übertragenen Signalen, wobei das Bypassventil Gas in the Einlaßleitung des Gasmotors einführt, wobei der Hauptsauerstoffsensor (11) stromauf eines in einer Abgasleitung (9) des Gasmotors (E) angebrachten Dreiwegekatalysators (10) angebracht ist, und wobei der Drucksensor (6) in einer Einlaßleitung (1) von einem Gas-Luft-Mischer (4) zu dem Motor angebracht ist;
Erfassen (23) von Verzerrungen von Antwortwellenformen von von einem zweiten Sauerstoffsensor (12) übertragenen Signalen, welcher Sensor stromab des Dreiwegekatalysators (10) angebracht ist; und
Steuern/Regeln des Antriebsstroms zur Entfernung der Verzerrungen.

2. Verfahren nach Anspruch 1, in dem als der Verzerrungserfassungsschritt eine Antwortverzögerung von führenden und/oder nachlaufenden Flanken der Antwortwellenformen erfaßt wird.

3. Verfahren nach Anspruch 1, in dem als der Verzerrungserfassungsschritt eine Asymmetrie der Antwortwellenformen erfaßt wird.

4. Verfahren nach Anspruch 1, 2 oder 3, in dem als der Verzerrungserfassungsschritt eine bestimmte Frequenzkomponente des Signals des zweiten Sauerstoffsensors erfaßt wird.

5. Verfahren nach Anspruch 4, in dem die Frequenzkomponente doppelt so hoch wie die Frequenz des Ventilantriebsstroms ist.

6. Verfahren nach Anspruch 1, 2 oder 3, in dem als der Verzerrungserfassungsschritt eine Differenz zwischen einer Zeit von einem Minimum des zweiten Sensorsignals zu dem unmittelbar folgenden Maximum und einer Zeit von dem Maximum zu dem unmittelbar folgenden Minimum erfaßt wird.

7. Verfahren nach Anspruch 1, 2 oder 3, in dem als der Verzerrungserfassungsschritt ein Hauptgradient eines Zyklus des zweiten Sensorsignals erfaßt wird.

8. Verfahren nach einem der vorhergehenden Ansprüche, in dem als der Steuerschritt die Gleichstromgrundlinie des periodischen Antriebsstroms gehoben oder gesenkt wird.

9. Verfahren nach einem der vorhergehenden Ansprüche, in dem der Ausgang des zweiten Sauerstoffsensors (12) überwacht wird, und, wenn er aus einem vorbestimmten Bereich fällt, ein obligatorisch kompensierendes Rückkopplungssignal sofort bereitgestellt wird, um den Antriebsstrom zu regeln, um den Ausgang in den vorbestimmten Bereich zu bringen.

10. Verfahren nach einem der vorhergehenden Ansprüche, in dem der Ausgang des zweiten Sauerstoffsensors (12) zu einer Zeit überwacht wird, zu der die Verzerrung beseitigt ist, und die Schwellenspannung des zweiten Sauerstoffsensors (12) gesteuert bzw. geregelt wird, um eine durch Änderungen in dem Dreiwegekatalysator (10) verursachte Differenz zwischen der Kennung des zweiten Sauerstoffsensors (12) und dem gewünschten Luft-Kraftstoff-Verhältnisfenster zu korrigieren.

## Revendications

1. Procédé de réglage du rapport air/carburant d'un moteur à gaz (E), comprenant les stades suivants :
modulation (21) d'un courant d'excitation périodique pour actionner une soupape de dérivation d'admission (8) avec des formes d'onde ayant des périodes et des amplitudes prédéterminées, en réponse à des signaux transmis par un capteur d'oxygène principal (11) et un capteur de pression (6), ladite soupape de dérivation introduisant du gaz dans la conduite d'admission du moteur à gaz, ledit détecteur principal (11) étant installé en amont d'un catalyseur à trois voies (10) intercalé dans une conduite d'échappement (9) du moteur à gas (E) et ledit capteur de pression (6) étant installé dans une conduite d'admission (1) entre un mélangeur gaz/air (4) et le moteur,
détection (23) des distorsions des formes d'onde de réponse de signaux transmis par un capteur d'oxygène secondaire (12), ledit capteur étant installé en aval dudit catalyseur à trois voies (10), et
réglage dudit courant d'excitation de manière à éliminer lesdites distorsions.

2. Procédé selon la revendication 1, dans lequel, dans ledit stade de détection des distorsions, on détecte un retard de réponse des flancs avant et/ou arrière desdites formes d'onde de réponse.

3. Procédé selon la revendication 1, dans lequel, dans ledit stade de détection des distorsions, on détecte une asymétrie desdites formes d'onde de réponse.

4. Procédé selon la revendication 1, 2 ou 3, dans lequel, dans ledit stade de détection des distorsions, on détecte une composante de fréquence spécifique du signal du capteur d'oxygène secondaire.

5. Procédé selon la revendication 4, dans lequel ladite composante de fréquence est le double de la fréquence du courant d'excitation de la soupape.

6. Procédé selon la revendication 1, 2 ou 3, dans lequel, dans ledit stade de détection des distorsions, on détecte une différence entre un temps qui s'écoule entre un minimum du signal du capteur secondaire et le maximum suivant immédiatement et un temps qui s'écoule entre ledit maximum et le minimum suivant immédiatement.

7. Procédé selon la revendication 1, 2 ou 3, dans lequel, dans ledit stade de détection des distorsions, on détecte le gradient moyen d'un cycle dudit signal du capteur secondaire.

8. Procédé selon l'une quelconque des revendications précédentes, dans lequel, dans ledit stade de réglage, la ligne de base CC du courant d'excitation périodique est augmentée ou diminuée.

9. Procédé selon l'une quelconque des revendications précédentes, dans lequel la sortie du capteur d'oxygène secondaire (12) est contrôlée et, lorsqu'elle tombe à l'extérieur d'une plage prédéterminée, un signal de rétroaction compensateur obligatoire est immédiatement délivré pour commander le courant d'excitation afin d'amener la sortie dans la plage prédéterminée.

10. Procédé selon l'une quelconque des revendications précédentes, dans lequel la sortie du capteur d'oxygène secondaire (12) est contrôlée au moment où la distorsion a été annulée, et la tension de seuil du capteur d'oxygène secondaire (12) est régler pour corriger une différence entre la caractéristique du capteur d'oxygène secondaire (12) et la fenêtre souhaitée du rapport air/carburant due à des changements dans le catalyseur à trois voies (10).
